(19) **Europäisches Patentamt / European Patent Office / Office européen des brevets**

(11) **EP 4 495 071 A1**

(12) **EUROPEAN PATENT APPLICATION**
published in accordance with Art. 153(4) EPC

(43) Date of publication:
**22.01.2025 Bulletin 2025/04**

(21) Application number: **23770394.7**

(22) Date of filing: **28.02.2023**

(51) International Patent Classification (IPC):
$C01D\ 7/07^{(2006.01)}$    $B01D\ 53/14^{(2006.01)}$
$B01D\ 53/22^{(2006.01)}$    $B01D\ 53/62^{(2006.01)}$
$B01D\ 53/74^{(2006.01)}$    $B01D\ 53/78^{(2006.01)}$
$B01D\ 69/02^{(2006.01)}$

(52) Cooperative Patent Classification (CPC):
**B01D 53/14; B01D 53/22; B01D 53/62;**
**B01D 53/74; B01D 53/78; B01D 69/02; C01D 7/07**

(86) International application number:
**PCT/JP2023/007402**

(87) International publication number:
**WO 2023/176436 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 JP 2022043484**

(71) Applicant: **NITTO DENKO CORPORATION**
**Ibaraki-shi**
**Osaka 567-8680 (JP)**

(72) Inventors:
• **FUOKA Daisuke**
 **Ibaraki-shi, Osaka 567-8680 (JP)**
• **MATSUDA Hirokazu**
 **Ibaraki-shi, Osaka 567-8680 (JP)**
• **KATAGIRI Makoto**
 **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **BICARBONATE PRODUCTION METHOD, CARBON DIOXIDE PRODUCTION METHOD, ORGANIC COMPOUND PRODUCTION METHOD, AND BICARBONATE PRODUCTION DEVICE**

(57) The present invention provides a bicarbonate production method suitable for producing a high purity bicarbonate while suppressing loss of carbon dioxide. The bicarbonate production method includes a generation step of generating a bicarbonate by using a mixed gas that contains carbon dioxide, and a concentration of the carbon dioxide in the mixed gas is 30 volume% or more and 95 volume% or less in a standard state.

FIG.1

**Description**

TECHNICAL FIELD

The present invention relates to a bicarbonate production method, a carbon dioxide production method, an organic compound production method, and a bicarbonate production device.

BACKGROUND ART

In recent years, global warming due to increase in greenhouse effect gases is one of important issues. Carbon dioxide is one of greenhouse effect gases that have a large influence on global warming. Carbon dioxide is a combustion product of fossil fuel, and is contained in a large amount in exhaust gas discharged from thermal power plants, cement plants, ironworks, and the like. Therefore, various technologies for separating or recovering carbon dioxide contained in such exhaust gas have been proposed. For example, Patent Literature 1 discloses a method in which carbon dioxide contained in exhaust gas is caused to be absorbed in an alkaline absorbent liquid (for example, sodium carbonate aqueous solution), to recover carbon dioxide as an insoluble compound (for example, sodium carbonate) being a reaction product between the absorbent liquid and carbon dioxide.

CITATION LIST

Patent Literature

Patent Literature 1: JP 2005-8478A

SUMMARY OF INVENTION

Technical Problem

In a conventional method, as disclosed in Patent Literature 1, in which exhaust gas is used as is, there are cases where a carbonate such as sodium carbonate is generated but a bicarbonate such as sodium bicarbonate is not generated. Even when a bicarbonate is generated, the purity thereof is low in general. Meanwhile, in order to increase the purity of the bicarbonate to be generated, if the alkali concentration of the alkaline absorbent liquid is decreased, loss of carbon dioxide increases, and the conversion rate (carbon dioxide recovery rate) from the put-in carbon dioxide to the bicarbonate decreases.

Therefore, an object of the present invention is to provide a bicarbonate production method suitable for producing a high purity bicarbonate while suppressing loss of carbon dioxide.

Solution to Problem

Bicarbonates are used as a reaction raw material for an organic compound such as a formate, and can also be used as they are, as in the case of a pharmaceutical raw material such as an antacid, for example. As compared with a carbonate, a bicarbonate has a large amount of substance of carbon dioxide with respect to metal cations, and is also suitable for a storage material for carbon dioxide. Carbon dioxide obtained through decomposition of a bicarbonate can be used as a reaction raw material for an organic compound such as a hydrocarbon. The present inventors conducted thorough studies, and found that bicarbonates desirably have a high purity in these usages. For example, a high purity bicarbonate has a high speed of progress of reaction, when used as a reaction raw material. From a high purity bicarbonate, a larger amount of carbon dioxide can be recovered. Based on this finding, the present inventors further advanced their studies, found that the concentration of carbon dioxide in exhaust gas influences not only the purity of a bicarbonate to be obtained but also the carbon dioxide recovery rate, and completed the present invention.

The present invention provides a bicarbonate production method including

a generation step of generating a bicarbonate by using a mixed gas that contains carbon dioxide, wherein
a concentration of the carbon dioxide in the mixed gas is 30 volume% or more and 95 volume% or less in a standard state.

In another aspect, the present invention provides a bicarbonate production method including:

a concentration step of obtaining, from a raw material gas that contains carbon dioxide, a mixed gas having a higher concentration of carbon dioxide than the raw material gas; and
a generation step of generating a bicarbonate by using the mixed gas.

In still another aspect, the present invention provides a bicarbonate production device including:

a concentration part configured to prepare, from a raw material gas that contains carbon dioxide, a mixed gas having a higher concentration of carbon dioxide than the raw material gas; and
a generation part configured to generate a bicarbonate by using the mixed gas.

Advantageous Effects of Invention

According to the present invention, it is possible to provide a bicarbonate production method suitable for producing a high purity bicarbonate while suppressing loss of carbon dioxide.

BRIEF DESCRIPTION OF THE DRAWINGS

FIG. 1 is a schematic configuration diagram showing an example of a bicarbonate production device of an embodiment.
FIG. 2 is a schematic cross-sectional view showing an example of a membrane separation device.
FIG. 3 is a cross-sectional view schematically showing an example of a separation membrane.
FIG. 4 is a perspective view schematically showing a modification of the membrane separation device.

DESCRIPTION OF EMBODIMENTS

A bicarbonate production method according to a first aspect of the present invention includes a generation step of generating a bicarbonate by using a mixed gas that contains carbon dioxide, wherein a concentration of the carbon dioxide in the mixed gas is 30 volume% or more and 95 volume% or less in a standard state.
In a second aspect of the present invention, for example, in the bicarbonate production method according to the first aspect, the concentration is 70 volume% or less in the standard state.
In a third aspect of the present invention, for example, the bicarbonate production method according to the first or second aspect further includes a concentration step of obtaining, from a raw material gas that contains carbon dioxide, the mixed gas having a higher concentration of carbon dioxide than the raw material gas.
A bicarbonate production method according to a fourth aspect of the present invention includes: a concentration step of obtaining, from a raw material gas that contains carbon dioxide, a mixed gas having a higher concentration of carbon dioxide than the raw material gas; and a generation step of generating a bicarbonate by using the mixed gas.
In a fifth aspect of the present invention, for example, in the bicarbonate production method according to the third or fourth aspect, in the concentration step, the mixed gas is obtained by separating the raw material gas by means of a separation membrane.
In a sixth aspect of the present invention, for example, in the bicarbonate production method according to the fifth aspect, a separation factor $\alpha$, for carbon dioxide with respect to nitrogen, of the separation membrane is 30 or more. Here, the separation factor $\alpha$ is measured by supplying a measurement gas composed of carbon dioxide and nitrogen to a space adjacent to one surface of the separation membrane, and decompressing a space adjacent to another surface of the separation membrane, and a concentration of the carbon dioxide in the measurement gas is 50 volume% in a standard state, the measurement gas supplied to the space adjacent to the one surface has a temperature of 30°C and a pressure of 0.1 MPa, and the space adjacent to the other surface is decompressed such that a pressure in the space is lower by 0.1 MPa than an atmospheric pressure in a measurement environment.
In a seventh aspect of the present invention, for example, in the bicarbonate production method according to any one of the third to sixth aspects, the raw material gas contains a combustion gas generated in combustion of fuel.
In an eighth aspect of the present invention, for example, in the bicarbonate production method according to any one of the first to seventh aspects, in the generation step, the bicarbonate is generated by bringing the mixed gas and a solution containing a base into contact with each other.
In a ninth aspect of the present invention, for example, in the bicarbonate production method according to the eighth aspect, the base contains an alkali metal element.
In a tenth aspect of the present invention, for example, in the bicarbonate production method according to the eighth or ninth aspect, a concentration of the base in the solution is 1 mol/L or more.
A carbon dioxide production method according to an eleventh aspect of the present invention includes a step of generating carbon dioxide by decomposing the bicarbonate produced by the bicarbonate production method according to any one of the first to tenth aspects, for example.

An organic compound production method according to a twelfth aspect of the present invention includes a step of generating an organic compound by using the carbon dioxide produced by the carbon dioxide production method according to the eleventh aspect, for example.

An organic compound production method according to a thirteenth aspect of the present invention includes a step of generating an organic compound by using the bicarbonate produced by the bicarbonate production method according to any one of the first to tenth aspects, for example.

A bicarbonate production device according to a fourteenth aspect of the present invention includes: a concentration part configured to prepare, from a raw material gas that contains carbon dioxide, a mixed gas having a higher concentration of carbon dioxide than the raw material gas; and a generation part configured to generate a bicarbonate by using the mixed gas.

The present invention will be described in detail below. The following description is not intended to limit the present invention to a specific embodiment.

[Bicarbonate production method]

A bicarbonate production method of the present embodiment includes a generation step of generating a bicarbonate by using a mixed gas that contains carbon dioxide, and the concentration of the carbon dioxide in the mixed gas is 30 volume% or more and 95 volume% or less in a standard state. In the present description, "standard state" means a state where the temperature is 0°C and the pressure is 1 atmospheric pressure (101 kPa).

For example, the concentration of carbon dioxide in an exhaust gas discharged from a thermal power plant or the like is normally as low as less than 20 volume%. Therefore, when a bicarbonate is to be generated using the exhaust gas as is, the progress of the reaction is slow, and a carbonate may be generated but no bicarbonate is generated in some cases. Even when a bicarbonate is generated, the purity thereof is low in general. Meanwhile, in order to increase the purity of the bicarbonate to be generated, if the alkali concentration of the alkaline absorbent liquid is decreased, loss of carbon dioxide increases, and the conversion rate (carbon dioxide recovery rate) from the put-in carbon dioxide to the bicarbonate decreases. In the bicarbonate production method of the present embodiment, the concentration of carbon dioxide in a mixed gas that is used in the generation step is 30 volume% or more and 95 volume% or less in the standard state, and thus, the bicarbonate production method is suitable for producing a high purity bicarbonate while suppressing loss of carbon dioxide.

The concentration of the carbon dioxide in the mixed gas may be 90 volume% or less, may be 80 volume% or less, or may be 70 volume% or less in the standard state. In this case, while the purity of the bicarbonate is maintained, loss of carbon dioxide can be more suppressed. The concentration of the carbon dioxide in the mixed gas may be 60 volume% or less in the standard state. The lower limit value of the concentration of the carbon dioxide in the mixed gas is not particularly limited, and is 40 volume%, for example.

The bicarbonate production method of the present embodiment may further include a concentration step of obtaining, from a raw material gas that contains carbon dioxide, the mixed gas having a higher concentration of carbon dioxide than the raw material gas. In the concentration step, the concentration of the carbon dioxide in the raw material gas is concentrated, whereby the mixed gas having a concentration of carbon dioxide of 30 volume% or more and 95 volume% or less in the standard state can be obtained.

The raw material gas contains a combustion gas generated in combustion of fuel. In the present description, "fuel" is a material that generates, when combusted, energy such as heat and light, and is a concept that encompasses not only fossil fuels such as petroleum, coal, and natural gas, but also fuels composed of biological fuels (biofuel) other than fossil fuels, e.g., waste wood from forests, agricultural waste, and livestock waste. The raw material gas may be an exhaust gas discharged from a thermal power plant, a cement plant, an ironworks, or the like.

From another aspect, a bicarbonate production method of the present embodiment includes: a concentration step of obtaining, from a raw material gas that contains carbon dioxide, a mixed gas having a higher concentration of carbon dioxide than the raw material gas; and a generation step of generating a bicarbonate by using the mixed gas. According to the bicarbonate production method, in the concentration step, the concentration of the carbon dioxide in the raw material gas is concentrated, whereby a mixed gas having a concentration of carbon dioxide of 30 volume% or more and 95 volume% or less in the standard state can be obtained. In addition, since, in the generation step, the mixed gas obtained in the concentration step is used, a high purity bicarbonate can be generated while loss of carbon dioxide is suppressed.

[Concentration step]

In the concentration step, the method for obtaining, from a raw material gas that contains carbon dioxide, a mixed gas having a higher concentration of carbon dioxide than the raw material gas is not particularly limited. For example, a membrane separation method using a separation membrane, or an adsorption method using an adsorbent can be adopted. Examples of the material for the adsorbent to be used in the adsorption method include an amine compound having a function of adsorbing carbon dioxide.

The membrane separation method is suitably used since adjustment of the concentration of carbon dioxide is easy. That is, in the concentration step, the mixed gas may be obtained by separating the raw material gas by means of a separation membrane.

A separation factor $\alpha$, for carbon dioxide with respect to nitrogen, of the separation membrane that is used in the concentration step is not particularly limited, and is, for example, 20 or more, and preferably 25 or more. More preferably, the separation factor $\alpha$ is 30 or more. The upper limit value of the separation factor $\alpha$ is not particularly limited, and is 100, for example. Here, the separation factor $\alpha$ is measured by supplying a measurement gas composed of carbon dioxide and nitrogen to a space adjacent to one surface of the separation membrane, and decompressing the space adjacent to another surface of the separation membrane. The concentration of the carbon dioxide in the measurement gas is 50 volume% in the standard state, and the measurement gas that is supplied to the space adjacent to the one surface has a temperature of 30°C and a pressure of 0.1 MPa. The space adjacent to the other surface is decompressed such that the pressure in the space is lower by 0.1 MPa than the atmospheric pressure in the measurement environment.

The separation factor $\alpha$ can be calculated from Formula (1) below. It should be noted that in Formula (1) below, $X_A$ and $X_B$ are respectively the volume ratio of the carbon dioxide and the volume ratio of the nitrogen in the measurement gas. $Y_A$ and $Y_B$ are respectively the volume ratio of the carbon dioxide and the volume ratio of the nitrogen in a permeated gas having permeated through the separation membrane.

$$\text{Separation factor } \alpha=(Y_A/Y_B)/(X_A/X_B) \ldots \text{Formula (1)}$$

[Generation step]

In the generation step, the method for generating the bicarbonate by using the mixed gas that contains carbon dioxide is not particularly limited. For example, in the generation step, the bicarbonate may be generated by bringing the mixed gas and a solution containing a base into contact with each other. The bicarbonate can be generated by introducing carbon dioxide into a solution (hereinafter, this may be referred to as basic solution) containing a base, to cause gas-liquid contact. That is, the generation step may include an absorption step of causing gas-liquid contact between the mixed gas and the basic solution to cause the basic solution to absorb the carbon dioxide. For the gas-liquid contact between the mixed gas and the basic solution, a static mixer described later can be used, for example.

The reaction in the generation step normally proceeds in two stages represented by Formula (2) below and Formula (3) below, and a bicarbonate is generated in the end. Formulas (2) and (3) below are an example when the base used in the basic solution is potassium hydroxide.

$$CO_2+2KOH \rightarrow K_2CO_3+H_2O \ldots \qquad \text{Formula (2)}$$

$$CO_2+K_2CO_3+H_2O \rightarrow 2KHCO_3 \ldots \qquad \text{Formula (3)}$$

Therefore, when the generation step is performed by using a gas, such as an exhaust gas, in which the concentration of contained carbon dioxide is low, the reaction stops at Formula (2) above without proceeding up to Formula (3) above, and the bicarbonate is not generated in some cases. Even if the reaction proceeds up to Formula (3) above, since the concentration of carbon dioxide contained in the gas is low, the purity of the bicarbonate that is generated is low. In order to increase the purity of the bicarbonate that is generated, it is conceivable to decrease the alkali concentration of the basic solution. However, in this case, loss of carbon dioxide increases, and the conversion rate (carbon dioxide recovery rate) from the put-in carbon dioxide to the bicarbonate decreases. It is also conceivable to repeatedly causing gas-liquid contact between the basic solution and carbon dioxide until the reaction of Formula (3) above proceeds. However, in this case, the treatment time significantly increases, and in addition, the amount of gas necessary for the reaction also increases, which is not practical. In the bicarbonate production method of the present embodiment, in the generation step, the mixed gas having a higher concentration of carbon dioxide than the raw material gas is used, specifically, the concentration of the carbon dioxide in the mixed gas is 30 volume% or more and 95 volume% or less in the standard state. Therefore, a high purity bicarbonate can be generated while loss of carbon dioxide is suppressed.

The purity of the bicarbonate generated in the generation step is, for example, 80% or more, and preferably 90% or more. The purity of the bicarbonate is more preferably 95% or more. The upper limit value of the purity of the bicarbonate is not particularly limited, and is 99%, for example. In the present description, "the purity of the bicarbonate" means the ratio of the amount of substance (mol) of the bicarbonate with respect to the total value (mol) of the amount of substance of the bicarbonate and the amount of substance of the carbonate generated in the generation step.

The solvent for the basic solution that is used in the generation step is not particularly limited, but preferably contains water, and more preferably is water.

The base that is used in the basic solution is not particularly limited as long as the base can react with carbon dioxide and generate a carbonate and subsequently a bicarbonate, and preferably is a hydroxide. Examples thereof include lithium bicarbonate, sodium bicarbonate, potassium bicarbonate, cesium bicarbonate, potassium hydroxide, sodium hydroxide, diazabicycloundecene, triethylamine, and the like. Among the above, a hydroxide that contains an alkali metal element is preferable, potassium hydroxide and sodium hydroxide are more preferable, and potassium hydroxide is further preferable.

The concentration of the base in the basic solution is not particularly limited as long as a carbonate and subsequently a bicarbonate can be generated. From the viewpoint of ensuring the generation amount of the bicarbonate, the concentration of the base is, with respect to 1 L of an aqueous phase solvent, preferably 0.1 mol or more, more preferably 0.5 mol or more, and further preferably 1 mol or more. From the viewpoint of reaction efficiency, the concentration of the base is preferably 30 mol or less, more preferably 20 mol or less, and further preferably 15 mol or less. However, when the concentration of the base exceeds the solubility of the aqueous phase, the solution is suspended.

The introduction method and the introduction order of carbon dioxide and the base into a reaction container is not particularly limited. However, it is preferable that, after the base is introduced into a reaction container, carbon dioxide is introduced. As for the introduction of carbon dioxide and the base, introduction of one or both may be continuously performed, or may be intermittently performed.

In the generation step, the reaction temperature in the reaction in which a carbonate and subsequently a bicarbonate are generated through reaction between carbon dioxide and the base is not particularly limited, but in order to dissolve carbon dioxide into the aqueous phase, is preferably 0°C or more and preferably 100°C or less.

The reaction time of the reaction in which a carbonate and subsequently a bicarbonate are generated through reaction between carbon dioxide and the base is not particularly limited, and for example, from the viewpoint of sufficiently ensuring the generation amount of the bicarbonate, is preferably 0.5 hours or more, more preferably 1 hour or more, and further preferably 2 hours or more. From the viewpoint of cost, the reaction time is preferably 24 hours or less, more preferably 12 hours or less, and further preferably 6 hours or less.

The carbonate and the bicarbonate generated through reaction between carbon dioxide and the base can be used as reaction raw materials for reaction with hydrogen. A carbonate and subsequently a bicarbonate are caused to be generated through reaction between carbon dioxide and the base in a reaction container, whereby the carbonate and subsequently the bicarbonate may be introduced into a reaction container.

[Bicarbonate production device]

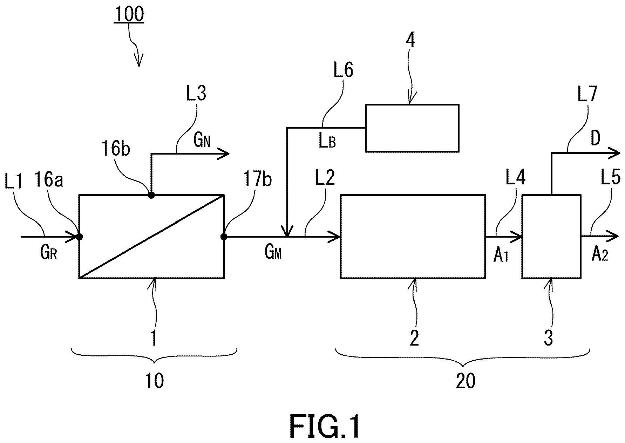

As shown in FIG. 1, a bicarbonate production device 100 (hereinafter, this may be referred to as production device 100) of the present embodiment includes a concentration part 10 and a generation part 20. The concentration part 10 prepares, from a raw material gas $G_R$ that contains carbon dioxide, a mixed gas $G_M$ having a higher concentration of carbon dioxide than the raw material gas $G_R$. The generation part 20 generates a bicarbonate by using the mixed gas $G_M$. The production device 100 can be used in the above-described bicarbonate production method of the present embodiment.

To the concentration part 10, the raw material gas $G_R$ is supplied through a flow passage L1. The concentration part 10 and the generation part 20 are connected to each other by a flow passage L2, and the generation part 20 is provided on the downstream side of the concentration part 10. To the generation part 20, the mixed gas $G_M$ is supplied through the flow passage L2.

[Concentration part]

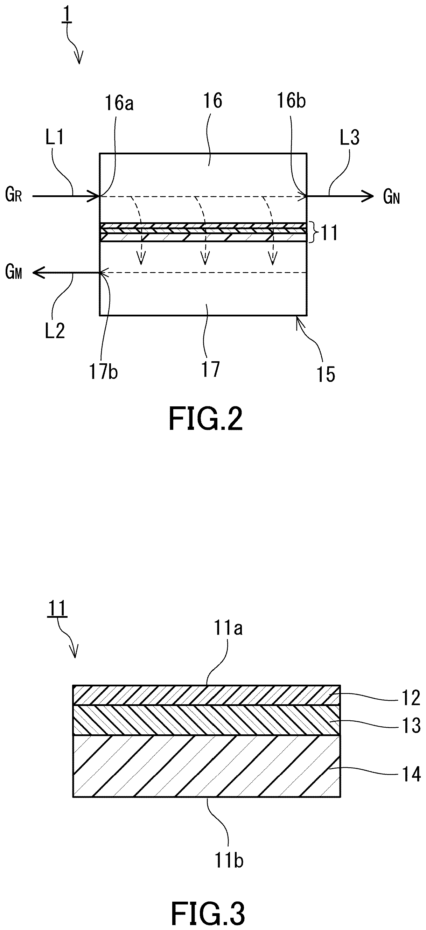

In the present embodiment, the concentration part 10 includes a membrane separation device 1. As shown in FIG. 2, the membrane separation device 1 includes a separation membrane 11 and a tank 15.

<Separation membrane>

The separation membrane 11 can allow, for example, an acid gas, particularly, carbon dioxide, contained in the raw material gas $G_R$, to preferentially permeate therethrough. It should be noted that the separation membrane 11 may allow another gas other than the acid gas contained in the raw material gas $G_R$, to preferentially permeate therethrough.

As shown in FIG. 3, the separation membrane 11 includes a separation functional layer 12, for example. The separation membrane 11 may further include a porous support member 14 supporting the separation functional layer 12, and an intermediate layer 13 disposed between the separation functional layer 12 and the porous support member 14. The intermediate layer 13 is in direct contact with each of the separation functional layer 12 and the porous support member 14, for example.

(Separation functional layer)

In the present embodiment, the separation functional layer 12 can allow carbon dioxide contained in the raw material gas $G_R$ to preferentially permeate therethrough. In a preferred embodiment, the separation functional layer 12 includes a resin. Examples of the resin included in the separation functional layer 12 include a polyether block amide resin, a polyamide resin, a polyether resin, a polyimide resin, a cellulose acetate resin, a silicone resin, and a fluorine resin. The separation functional layer 12 preferably includes a polyether block amide resin. In this embodiment, the separation functional layer 12 is preferably composed substantially of a resin. In the present description, the phrase "composed substantially of" means exclusion of another component that alters essential characteristics of a material referred to, and for example, means that 95 wt% or more or even 99 wt% or more is composed of the material.

In another preferred embodiment, the separation functional layer 12 includes an ionic liquid. The ionic liquid is a salt (an ionic compound) that is liquid at 25°C. The separation functional layer 12 includes, for example, a double-network gel including an ionic liquid. The double-network gel is a gel including two types of network structures independent of each other. The double-network gel includes, for example, a first network structure composed mainly of an organic material, a second network structure composed mainly of an inorganic material, and an ionic liquid. In the present description, the phrase "composed mainly of" means that 50 wt% or more or even 70 wt% or more is composed of the material. It should be noted that the combination of the first network structure and the second network structure is not limited to the above described. As an example, the first network structure may be composed mainly of a first organic material and the second network structure may be composed mainly of a second organic material.

The organic material for constituting the first network structure includes, for example, a polymer such as polyacrylamide (particularly, polydialkylacrylamide such as polydimethylacrylamide). The polymer included in the organic material may have a structural unit derived from an acrylamide derivative and may further include a cross-linked structure. The polymer including a cross-linked structure can be prepared by a known method. First, a prepolymer having a structural unit having an N-hydroxysuccinimide ester group is prepared, for example. The structural unit having an N-hydroxysuccinimide ester group is derived from N-acryloxysuccinimide, for example. Next, the prepolymer is allowed to react with an amine cross linking agent to obtain a polymer including a cross-linked structure. The amine cross linking agent is a compound, such as ethylene glycol bis(3-aminopropyl) ether, having two or more primary amino groups.

The second network structure may include a network of a plurality of particles. The network of the plurality of particles are formed by, for example, the plurality of particles being bonded to each other by hydrogen bonds. The particles included in the second network structure may be particles exemplified as the nanoparticles described later. In an example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms, and these may be each further substituted by a hydroxy group, a cyano group, an amino group, a monovalent ether group, or the like (for example a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and a substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and a substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl] imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([C$_4$mim][TF$_2$N]), and 1-(2-hydroxyethyl)-3-methylimidazolium bis(trifluoromethanesulfonyl)imide ([C$_2$OHim][TF$_2$N]).

The method for preparing the double-network gel is not particularly limited, and the method disclosed in E. Kamio et al., Adv.Mater, 29, 1704118 (2017) can be used, for example.

The content of the ionic liquid in the double-network gel is, for example, 50 wt% or more, preferably 60 wt% or more, more preferably 70 wt% or more, and further preferably 80 wt% or more. The higher the content of the ionic liquid is, the more preferentially the separation functional layer 12 allows the carbon dioxide contained in the raw material gas G$_R$ to permeate therethrough. The upper limit value of the content of the ionic liquid is not particularly limited and is 95 wt%, for example.

The content of the first network structure, in the double-network gel, composed mainly of an organic material is, for example, 1 wt% or more, preferably 5 wt% or more, and more preferably 10 wt% or more. The upper limit value of the content of the first network structure is 15 wt%, for example. The content of the second network structure, in the double-network gel, composed mainly of an inorganic material is, for example, 1 wt% or more from the viewpoint of improving the strength of the double-network gel. The upper limit value of the content of the second network structure is 5 wt%, for example. The ratio of the total value of the weight of the first network structure and the weight of the second network structure with respect to the weight of the double-network gel is, for example, 2 wt% or more, preferably 5 wt% or more, and more preferably 10 wt% or more. This ratio is preferably 20 wt% or less. In this embodiment, the separation functional layer 12 is preferably composed substantially of the double-network gel.

The thickness of the separation functional layer 12 is, for example, 50 μm or less, preferably 25 μm or less, and more preferably 15 μm or less. In some cases, the thickness of the separation functional layer 12 may be 10 μm or less, may be 5.0 μm or less, or may be 2.0 μm or less. The thickness of the separation functional layer 12 may be 0.05 μm or more, or 0.1 μm or more.

(Intermediate layer)

The intermediate layer 13 includes a resin, for example, and may further include nanoparticles dispersed in the resin (a matrix). The nanoparticles may be separated from each other or partially aggregate in the matrix. The material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. The inorganic material included in the nanoparticles is, for example, silica, titania, or alumina. Preferably, the nanoparticles include silica.

The thickness of the intermediate layer 13 is not particularly limited, and is, for example less than 50 $\mu$m, preferably 40 $\mu$m or less, and more preferably 30 $\mu$m or less. The lower limit value of the thickness of the intermediate layer 13 is not particularly limited, and is 1 $\mu$m, for example. The intermediate layer 13 is, for example, a layer having a thickness of less than 50 $\mu$m.

(Porous support member)

The porous support member 14 supports the separation functional layer 12 via the intermediate layer 13. Examples of the porous support member 14 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; porous glass; and a mesh screen. The porous support member 14 may be a combination of two or more of these materials.

The porous support member 14 has an average pore diameter of 0.01 to 0.4 $\mu$m, for example. The thickness of the porous support member 14 is not particularly limited, and is, for example, 10 $\mu$m or more, preferably 20 $\mu$m or more, and more preferably 50 $\mu$m or more. The thickness of the porous support member 14 is, for example, 300 $\mu$m or less, preferably 200 $\mu$m or less, and more preferably 150 $\mu$m or less.

(Characteristics of separation membrane)

The permeation rate of the carbon dioxide permeating through the separation membrane 11 is, for example, 480 GPU or more, preferably 500 GPU or more, more preferably 530 GPU or more, and further preferably 550 GPU or more. The upper limit value of the permeation rate is not particularly limited, and is 1000 GPU, for example. It should be noted that GPU means $10^{-6} \cdot cm^3(STP)/(sec \cdot cm^2 \cdot cmHg)$. $cm^3(STP)$ means the volume of carbon dioxide in the standard state.

The permeation rate can be calculated by the following method. First, a measurement gas composed of carbon dioxide and nitrogen is supplied to a space adjacent to one surface (for example, a principal surface 11a on the separation functional layer 12 side of the separation membrane 11) of the separation membrane 11, and a space adjacent to another surface (for example, a principal surface 11b on the porous support member 14 side of the separation membrane 11) of the separation membrane 11 is decompressed. Accordingly, a permeated gas that has permeated through the separation membrane 11 is obtained. The weight of the permeated gas, and the volume ratio of the carbon dioxide and the volume ratio of the nitrogen in the permeated gas are measured. From the measurement result, the permeation rate can be calculated. In the above operation, the concentration of the carbon dioxide in the measurement gas is 50 volume% in the standard state. The measurement gas supplied to the space adjacent to the one surface of the separation membrane 11 has a temperature of 30°C and a pressure of 0.1 MPa. The space adjacent to the other surface of the separation membrane 11 is decompressed such that the pressure in the space is lower by 0.1 MPa than the atmospheric pressure in the measurement environment.

The separation factor $\alpha$, for carbon dioxide with respect to nitrogen, of the separation membrane 11 of the present embodiment is not particularly limited as described above, and is, for example, 20 or more and preferably 25 or more. The separation factor $\alpha$ is more preferably 30 or more. The upper limit value of the separation factor $\alpha$ is not particularly limited, and is 100, for example.

<Tank>

The tank 15 includes a first chamber 16 and a second chamber 17. The separation membrane 11 is disposed in the tank 15. In the tank 15, the separation membrane 11 separates the first chamber 16 and the second chamber 17 from each other. The separation membrane 11 extends from one of a pair of wall surfaces of the tank 15 to the other.

The first chamber 16 has an inlet 16a and an outlet 16b. The second chamber 17 has an outlet 17b. The inlet 16a, the outlet 16b, and the outlet 17b are each an opening formed in a corresponding wall surface of the tank 15, for example.

[Generation part]

In the present embodiment, the generation part 20 includes a contact part 2 and a separation part 3. The contact part 2 causes gas-liquid contact between the mixed gas $G_M$ and a basic solution $L_B$, to prepare an absorbent liquid $A_1$ being a gas-liquid two-phase flow. In the absorbent liquid $A_1$, firstly, a carbonate is generated, and subsequently, a bicarbonate is generated through reaction between the carbonate and carbon dioxide. The separation part 3 separates surplus carbon dioxide D from the absorbent liquid $A_1$, to prepare an absorbent liquid $A_2$ in which bubbles of carbon dioxide are scarcely mixed.

To the contact part 2, the mixed gas $G_M$ is supplied through the flow passage L2. The contact part 2 and the separation part 3 are connected to each other by a flow passage L4, and the separation part 3 is provided on the downstream side of the contact part 2. The absorbent liquid $A_2$ prepared in the separation part 3 is sent out to the outside through a flow passage L5.

(Contact part)

As shown in FIG. 1, the flow passage L2 has connected thereto a basic solution tank 4 via a flow passage L6. The basic solution $L_B$ discharged from the basic solution tank 4 to the flow passage L2 is introduced to the contact part 2 together with the mixed gas $G_M$. The contact part 2 causes fine bubbles of carbon dioxide contained in the mixed gas $G_M$ to be sufficiently dispersed in the basic solution $L_B$, thereby preparing the absorbent liquid $A_1$. The contact part 2 is not particularly limited as long as the contact part 2 can prepare the absorbent liquid $A_1$. As the contact part 2, for example, a pass-through-type or motive-power-type mixer can be used. An example of the pass-through-type mixer is a static mixer. The static mixer includes a tube-shaped body and a helical vane structure provided along the longitudinal direction inside the body. The helical vane structure has a structure in which left-handed helical vanes and right-handed helical vanes are alternately arranged. The basic solution $L_B$ and fine bubbles of carbon dioxide are stirred by passing through the helical vane structure, whereby gas-liquid contact is realized. An example of the motive-power-type mixer is a stirrer having motive-power-type vanes.

A configuration in which the basic solution $L_B$ discharged from the basic solution tank 4 passes through the contact part 2, and then is returned to the basic solution tank 4, may be adopted. That is, a configuration in which the basic solution $L_B$ is circulated through the contact part 2 and the basic solution tank 4 may be adopted.

In the present embodiment, the contact part 2 and the separation part 3 are implemented as separate elements, but the contact part 2 and the separation part 3 may be implemented as one element having both functions. An example of such an element is a bubble tower.

(Separation part)

The separation part 3 is not particularly limited as long as the separation part 3 can prepare, from the absorbent liquid $A_1$, the absorbent liquid $A_2$ in which bubbles of carbon dioxide are scarcely mixed. The separation part 3 may be, for example, a gas-liquid separation tank including a feed port and a discharge port provided below the feed port. In the gas-liquid separation tank, by the time when the absorbent liquid $A_1$ supplied from the feed port descends and reaches the discharge port, bubbles of the surplus carbon dioxide D rise due to buoyancy, to be separated from the absorbent liquid $A_1$. As a result, the absorbent liquid $A_2$ from which bubbles of the surplus carbon dioxide D have been separated is discharged from the discharge port. The surplus carbon dioxide D goes through a flow passage L7 provided at an upper portion of the gas-liquid separation tank, to be discharged to the outside.

Each step for production of a bicarbonate using the production device 100 is performed as follows, for example.

The concentration step is performed in the concentration part 10 as follows, for example. First, through the inlet 16a, the raw material gas $G_R$ is supplied to the first chamber 16 (feed-side space) of the membrane separation device 1. The concentration of the carbon dioxide in the raw material gas $G_R$ is, for example, 20 volume% or less in the standard state. The concentration of the carbon dioxide in the raw material gas $G_R$ may be 15 volume% or less or may be 10 volume% or less. The raw material gas $G_R$ contains a combustion gas generated in combustion of fuel. The raw material gas $G_R$ may be an exhaust gas discharged from a thermal power plant, a cement plant, an ironworks, or the like.

The pressure in the first chamber 16 may be increased through the supply of the raw material gas $G_R$. The membrane separation device 1 may further include a pump (not shown) for increasing the pressure in the first chamber 16. The pressure of the raw material gas $G_R$ to be supplied to the first chamber 16 is, for example 0.1 MPa or more and preferably 0.3 MPa or more.

In a state where the raw material gas $G_R$ is supplied to the first chamber 16, the inside of the second chamber 17 may be decompressed. The membrane separation device 1 may further include a pump (not shown) for decompressing the second chamber 17. The second chamber 17 may be decompressed such that the pressure in the space in the second chamber 17 becomes lower, for example, by 10 kPa or more, preferably 50 kPa or more, and more preferably 100 kPa or more than the atmospheric pressure in the measurement environment.

Through the supply of the raw material gas $G_R$ into the first chamber 16, the mixed gas $G_M$ having a higher content of carbon dioxide than the raw material gas $G_R$ can be obtained on the other surface side of the separation membrane 11.

That is, the mixed gas $G_M$ is supplied to the second chamber 17. The mixed gas $G_M$ contains carbon dioxide as a main component. However, the mixed gas $G_M$ may contain a small amount of another gas other than carbon dioxide. The mixed gas $G_M$ is discharged to the outside of the tank 15 through the outlet 17b, and then is supplied to the generation part 20. The concentration of the carbon dioxide in the mixed gas $G_M$ is 30 volume% or more and 95 volume% or less in the standard state. The concentration of the carbon dioxide in the mixed gas $G_M$ may be 90 volume% or less, may be 80 volume% or less, or may be 70 volume% or less in the standard state.

The concentration of the carbon dioxide in the raw material gas $G_R$ gradually decreases, from the inlet 16a of the first chamber 16 toward the outlet 16b. The raw material gas $G_R$ treated in the first chamber 16 is discharged, as a non-permeated gas $G_N$, through the outlet 16b to the outside via a flow passage L3 provided in the tank 15.

The generation step is performed in the generation part 20 as follows, for example. First, the mixed gas $G_M$ is supplied to the contact part 2. To the contact part 2, the basic solution $L_B$ is introduced from the basic solution tank 4 through the flow passage L2. In the contact part 2, gas-liquid contact between the mixed gas $G_M$ and the basic solution $L_B$ is realized, whereby the absorbent liquid $A_1$ being a gas-liquid two-phase flow is obtained. In the absorbent liquid $A_1$, firstly, a carbonate is generated, and subsequently, a bicarbonate is generated through reaction between the carbonate and carbon dioxide. The obtained absorbent liquid $A_1$ is supplied to the separation part 3. In the separation part 3, the surplus carbon dioxide D is separated from the absorbent liquid $A_1$, and the absorbent liquid $A_2$ in which bubbles of carbon dioxide are scarcely mixed is obtained.

< Modification of membrane separation device>

The membrane separation device 1 shown in FIG. 2 is an example of the membrane separation device of the bicarbonate production device 100 of the present embodiment. The membrane separation device of the production device 100 is not limited to a flat membrane type as in the membrane separation device 1 shown in FIG. 2. In the following, a modification of the membrane separation device of the production device 100 will be described.

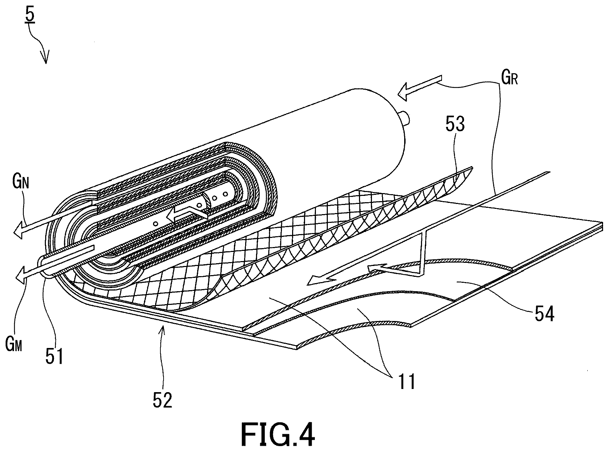

The membrane separation device of the production device 100 may be a membrane separation device 5 as shown in FIG. 4. The membrane separation device 5 includes a central tube 51 and a laminate 52. The laminate 52 includes the separation membrane 11. That is, the membrane separation device 5 is a membrane element of a spiral type.

The central tube 51 has a cylindrical shape. In the surface of the central tube 51, a plurality of holes for allowing the raw material gas $G_R$ to flow into the central tube 51 are formed. Examples of the material of the central tube 51 include: a resin such as an acrylonitrile-butadiene-styrene copolymer resin (ABS resin), a polyphenylene ether resin (PPE resin), or a polysulfone resin (PSF resin); and a metal such as stainless steel or titanium. The inner diameter of the central tube 51 is in a range of 20 to 100 mm, for example.

The laminate 52 further includes a feed-side flow passage material 53 and a permeation-side flow passage material 54 in addition to the separation membrane 11. The laminate 52 is wound around the central tube 51. The membrane separation device 5 may further include an exterior material (not shown).

As the feed-side flow passage material 53 and the permeation-side flow passage material 54, a resin-made net composed of polyphenylene sulfide (PPS) or an ethylene-chlorotrifluoroethylene copolymer (ECTFE) can be used, for example.

Membrane separation using the membrane separation device 5 is performed by the following method, for example. First, the raw material gas $G_R$ is supplied to one end of the wound laminate 52. The permeated gas, i.e., the mixed gas $G_M$, having permeated through the separation membrane 11 of the laminate 52 moves into the central tube 51. The mixed gas $G_M$ is discharged through the central tube 51 to the outside, and then is supplied to the generation part 20. The raw material gas $G_R$ treated in the membrane separation device 5 is discharged, as the non-permeated gas $G_N$, from the other end of the wound laminate 52 to the outside. Accordingly, from the raw material gas $G_R$, the mixed gas $G_M$ having a higher concentration of carbon dioxide than the raw material gas $G_R$ can be separated.

[Carbon dioxide production method]

A carbon dioxide production method of the present embodiment includes a step of generating carbon dioxide by decomposing the bicarbonate produced by the above bicarbonate production method. For example, through addition of an acid such as hydrochloric acid to a bicarbonate, the bicarbonate can be decomposed, whereby carbon dioxide can be generated. Through heating of a bicarbonate as well, the bicarbonate can be decomposed, whereby carbon dioxide can be generated. The carbon dioxide obtained through decomposition of the bicarbonate can be used as a reaction raw material for an organic compound such as a hydrocarbon.

[Organic compound production method]

An organic compound production method of the present embodiment includes a step of generating an organic compound by using the carbon dioxide produced by the above carbon dioxide production method. An example of the organic compound generated in this manner is a hydrocarbon. For example, when carbon dioxide and hydrogen are allowed to react by using a metal catalyst, a hydrocarbon can be obtained.

Alternatively, an organic compound production method of the present embodiment includes a step of generating an organic compound by using the bicarbonate produced by the above bicarbonate production method. An example of the organic compound generated in this manner is a formate. For example, in the presence of a solvent, when a bicarbonate and hydrogen are allowed to react by using a metal catalyst, a formate can be obtained. Formic acid produced by using, for example, electrodialysis from a formate has a low energy necessary for dehydrogenation reaction and allows simple handling, and thus, is an excellent compound as a storage material for hydrogen or carbon dioxide.

[Examples]

In the following, the present invention will be described in further detail with reference to Examples and Comparative Examples. However, the present invention is not limited thereto.

Using the production device 100 shown in FIG. 1, bicarbonates of Examples and Comparative Examples were obtained by the bicarbonate production method described above.

(Example 1)

In the concentration step, a gas composed of carbon dioxide and nitrogen was used as the raw material gas. The concentration of the carbon dioxide in the raw material gas was 10 volume% in the standard state. The separation factor $\alpha$, of the separation membrane, for the carbon dioxide with respect to the nitrogen was 50. A mixed gas was obtained by separating the raw material gas by means of the separation membrane. The concentration of the carbon dioxide in the obtained mixed gas was 40 volume% in the standard state.

In the generation step, as the basic aqueous solution, 3 L of a potassium hydroxide aqueous solution whose concentration was adjusted to 4.2 mol/L was used. The overall flow rate of the mixed gas in the generation step was set to 17 L/min. The potassium hydroxide aqueous solution was circulated in the device at the same flow rate (17 L/min) as that of the mixed gas, and gas-liquid contact was repeatedly caused, to prepare an absorbent liquid. It should be noted that the mixed gas was caused to flow in one passage without being circulated. Surplus carbon dioxide being an unreacted portion was discharged to the outside. The absorbent liquid in the device was periodically collected during the test, and pH was measured by using a pH meter (manufactured by HORIBA, Ltd., LAQUAtwin pH-11B). Upon the pH becoming less than 9, sending of the potassium hydroxide aqueous solution and putting-in of the mixed gas were stopped, and the absorbent liquid was collected.

[Bicarbonate purity calculation method]

Using an ion meter (manufactured by HORIBA, Ltd., LAQUAtwin K-11), the concentration of potassium ions contained in the collected absorbent liquid was measured. Next, calcium chloride was put into the collected absorbent liquid, to be allowed to react with potassium bicarbonate in the absorbent liquid, whereby carbon dioxide was generated. Based on the generated carbon dioxide, the concentration of potassium bicarbonate was calculated. Based on the concentration of potassium ions and the concentration of potassium bicarbonate, the purity (%) of the bicarbonate was calculated.

[Calculation method for carbon dioxide recovery rate]

From the treatment time and the flow rate of the surplus carbon dioxide discharged to the outside, the amount of carbon dioxide discharged to the outside was calculated. Next, the amount of carbon dioxide consumed in the generation step was calculated from the flow rate of the carbon dioxide put in the production device 100 and the generation amount of potassium bicarbonate contained in the collected absorbent liquid. Based on the amount of the carbon dioxide discharged to the outside and the amount of the carbon dioxide added in the generation step, the conversion rate (carbon dioxide recovery rate) (%) from carbon dioxide to the bicarbonate was calculated.

[Energy consumption calculation method]

The energy consumption in the concentration step, i.e., the energy necessary for obtaining the mixed gas from the raw material gas, was regarded as the energy consumption. The energy consumption in the generation step, i.e., the energy necessary for generating a bicarbonate, had a very small value with respect to the energy consumption in the concentration step, and thus, was regarded as 0. The energy when a mixed gas having a concentration of carbon dioxide being 40 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption.

(Example 2)

The concentration of the carbon dioxide in the mixed gas prepared through the concentration step was 50 volume% in the standard state. Potassium bicarbonate of Example 2 was obtained by the same method as in Example 1 except for this. The purity of the bicarbonate and the carbon dioxide recovery rate of Example 2 were obtained by the same method as in Example 1. In addition, the energy when a mixed gas having a concentration of carbon dioxide being 50 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption of Example 2.

(Example 3)

The concentration of the carbon dioxide in the mixed gas prepared through the concentration step was 60 volume% in the standard state. Potassium bicarbonate of Example 3 was obtained by the same method as in Example 1 except for this. The purity of the bicarbonate and the carbon dioxide recovery rate of Example 3 were obtained by the same method as in Example 1. In addition, the energy when a mixed gas having a concentration of carbon dioxide being 60 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption of Example 3.

(Example 4)

The concentration of the carbon dioxide in the mixed gas prepared through the concentration step was 90 volume% in the standard state. Potassium bicarbonate of Example 4 was obtained by the same method as in Example 1 except for this. The purity of the bicarbonate and the carbon dioxide recovery rate of Example 4 were obtained by the same method as in Example 1. In addition, the energy when a mixed gas having a concentration of carbon dioxide being 90 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption of Example 4.

(Example5)

The concentration of the carbon dioxide in the mixed gas prepared through the concentration step was 50 volume% in the standard state. The separation factor $\alpha$ of the separation membrane used in the concentration step was 30. Potassium bicarbonate of Example 5 was obtained by the same method as in Example 1 except for these. The purity of the bicarbonate and the carbon dioxide recovery rate of Example 5 were obtained by the same method as in Example 1. In addition, the energy when a mixed gas having a concentration of carbon dioxide being 50 volume% in the standard state was obtained at the concentration of carbon dioxide in the raw material gas being 10 volume% (standard state), the permeation rate being 800 GPU, the separation factor $\alpha$ being 30, and the carbon dioxide recovery rate being 90% was calculated, and this energy was regarded as the energy consumption of Example 5.

(Example 6)

In the generation step, as the basic aqueous solution, 3 L of a potassium hydroxide aqueous solution whose concentration was adjusted to 8.0 mol/L was used. Potassium bicarbonate of Example 6 was obtained by the same method as in Example 1 except for this. The purity of the bicarbonate and the carbon dioxide recovery rate of Example 6 were obtained by the same method as in Example 1. In addition, the energy when a mixed gas having a concentration of carbon dioxide being 40 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption of Example 6.

(Example 7)

The concentration of the carbon dioxide in the mixed gas prepared through the concentration step was 95 volume% in the standard state. Potassium bicarbonate of Example 7 was obtained by the same method as in Example 1 except for this. The purity of the bicarbonate and the carbon dioxide recovery rate of Example 7 were obtained by the same method as in Example 1. In addition, the energy when a mixed gas having a concentration of carbon dioxide being 95 volume% in the standard state was obtained at the concentration of carbon dioxide in the raw material gas being 10 volume% (standard state), the permeation rate being 800 GPU, the separation factor $\alpha$ being 50, and the carbon dioxide recovery rate being 90% was calculated, and this energy was regarded as the energy consumption of Example 7.

(Comparative Example 1)

Without performing the concentration step, the generation step was performed by using the raw material gas. The concentration of the carbon dioxide in the raw material gas was 16 volume% in the standard state. Potassium bicarbonate of Comparative Example 1 was obtained by the same method as in Example 1 except for this. The purity of the bicarbonate and the carbon dioxide recovery rate of Comparative Example 1 were obtained by the same method as in Example 1.

(Comparative Example 2)

In the generation step, as the basic aqueous solution, 3 L of a potassium hydroxide aqueous solution whose concentration was adjusted to 0.2 mol/L was used. Potassium bicarbonate of Comparative Example 2 was obtained by the same method as in Comparative Example 1 except for this. The purity of the bicarbonate and the carbon dioxide recovery rate of Comparative Example 2 were obtained by the same method as in Example 1.

(Comparative Example 3)

In the generation step, as the basic aqueous solution, 3 L of a potassium hydroxide aqueous solution whose concentration was adjusted to 10.0 mol/L was used. The generation step was performed by the same method as in Comparative Example 1 except for this. The purity of the bicarbonate and the carbon dioxide recovery rate of Comparative Example 3 were obtained by the same method as in Example 1. In Comparative Example 3, the bicarbonate was not generated, and only the carbonate was generated.

[Table 1]

| | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|
| $CO_2$ concentration of raw material gas [vol%] | 10 | 10 | 10 | 10 | 10 | 10 | 10 | 16 | 16 | 16 |
| $CO_2$ concentration of mixed gas [vol%] | 40 | 50 | 60 | 90 | 50 | 40 | 95 | - | - | - |
| Separation factor $\alpha$ | 50 | 50 | 50 | 50 | 30 | 50 | 50 | - | - | - |
| Concentration of basic aqueous solution [mol/L] | 4.2 | 4.2 | 4.2 | 4.2 | 4.2 | 8.0 | 4.2 | 4.2 | 0.2 | 10.0 |
| Flow rate of basic aqueous solution [L/min] | 17 | 17 | 17 | 17 | 17 | 17 | 17 | 17 | 17 | 17 |
| Overall flow rate [L/min] | 17 | 17 | 17 | 17 | 17 | 17 | 17 | 17 | 17 | 17 |
| Purity of bicarbonate [%] | 95< | 95< | 95< | 95< | 95< | 95< | 95< | 20 | 99< | 0 |
| Carbon dioxide recovery rate [%] | 81 | 81 | 81 | 81 | 81 | 81 | 81 | 85 | 75 | 60 |
| Energy consumption [kWh/kg-$CO_2$] | 0.38 | 0.39 | 0.44 | 0.78 | 0.52 | 0.52 | 0.82 | - | - | - |

As seen from Table 1, in Examples 1 to 7, as compared with Comparative Examples 1 to 3, the carbon dioxide recovery rate was 80% or more and the purity of the bicarbonate was larger than 95%. Thus, in Examples 1 to 7 in which the concentration of the carbon dioxide in the mixed gas was 30 volume% or more and 95 volume% or less in the standard state, loss of carbon dioxide was suppressed and a high purity bicarbonate was produced. It should be noted that, in Comparative Example 2 in which the concentration of the basic aqueous solution was decreased down to 0.2 mol/L, although the purity of the bicarbonate was high, loss of carbon dioxide was large and the carbon dioxide recovery rate decreased.

As seen from comparison between Examples 1 to 3 and 5 to 6, and Examples 4 and 7, in Examples 1 to 3 and 5 to 6 in which the concentration of the carbon dioxide in the mixed gas was 70 volume% or less in the standard state, the energy consumption was 0.60 kWh/kg-$CO_2$ or less, and a high purity bicarbonate was able to be generated with less energy consumption.

As described above, the concentration of the carbon dioxide in the mixed gas used in the generation step influences not only the purity of the bicarbonate to be obtained, but also the carbon dioxide recovery rate. In the above Examples, potassium hydroxide was used as the base of the basic solution. However, for example, also in a case where a hydroxide containing another alkali metal element such as sodium hydroxide is used instead of potassium hydroxide, it is inferred that the purity of the bicarbonate, the carbon dioxide recovery rate, and the energy consumption exhibit tendencies similar to those in Examples above.

INDUSTRIAL APPLICABILITY

The bicarbonate production method of the present embodiment is suitable for producing a bicarbonate by using a raw material gas, particularly, an exhaust gas, that contains carbon dioxide.

**Claims**

1. A bicarbonate production method comprising

   a generation step of generating a bicarbonate by using a mixed gas that contains carbon dioxide, wherein
   a concentration of the carbon dioxide in the mixed gas is 30 volume% or more and 95 volume% or less in a standard state.

2. The bicarbonate production method according to claim 1, wherein
   the concentration is 70 volume% or less in the standard state.

3. The bicarbonate production method according to claim 1, further comprising
   a concentration step of obtaining, from a raw material gas that contains carbon dioxide, the mixed gas having a higher concentration of carbon dioxide than the raw material gas.

4. A bicarbonate production method comprising:

   a concentration step of obtaining, from a raw material gas that contains carbon dioxide, a mixed gas having a higher concentration of carbon dioxide than the raw material gas; and
   a generation step of generating a bicarbonate by using the mixed gas.

5. The bicarbonate production method according to claim 3 or 4, wherein
   in the concentration step, the mixed gas is obtained by separating the raw material gas by means of a separation membrane.

6. The bicarbonate production method according to claim 5, wherein

   a separation factor $\alpha$, for carbon dioxide with respect to nitrogen, of the separation membrane is 30 or more, in which
   the separation factor $\alpha$ is measured by supplying a measurement gas composed of carbon dioxide and nitrogen to a space adjacent to one surface of the separation membrane, and decompressing a space adjacent to another surface of the separation membrane, and
   a concentration of the carbon dioxide in the measurement gas is 50 volume% in a standard state, the measurement gas supplied to the space adjacent to the one surface has a temperature of 30°C and a pressure of 0.1 MPa, and the space adjacent to the other surface is decompressed such that a pressure in the space is lower by 0.1 MPa than an atmospheric pressure in a measurement environment.

7. The bicarbonate production method according to claim 3 or 4, wherein the raw material gas contains a combustion gas generated in combustion of fuel.

8. The bicarbonate production method according to claim 1 or 4, wherein in the generation step, the bicarbonate is generated by bringing the mixed gas and a solution containing a base into contact with each other.

9. The bicarbonate production method according to claim 8, wherein the base contains an alkali metal element.

10. The bicarbonate production method according to claim 8, wherein a concentration of the base in the solution is 1 mol/L or more.

11. A carbon dioxide production method comprising a step of generating carbon dioxide by decomposing the bicarbonate produced by the production method according to claim 1 or 4.

12. An organic compound production method comprising a step of generating an organic compound by using the carbon dioxide produced by the production method according to claim 11.

13. An organic compound production method comprising a step of generating an organic compound by using the bicarbonate produced by the production method according to claim 1 or 4.

14. A bicarbonate production device comprising:

a concentration part configured to prepare, from a raw material gas that contains carbon dioxide, a mixed gas having a higher concentration of carbon dioxide than the raw material gas; and
a generation part configured to generate a bicarbonate by using the mixed gas.

FIG.1

FIG.2

FIG.3

FIG.4

## INTERNATIONAL SEARCH REPORT

| International application No. |
|---|
| **PCT/JP2023/007402** |

---

**A.    CLASSIFICATION OF SUBJECT MATTER**

*C01D 7/07*(2006.01)i; *B01D 53/14*(2006.01)i; *B01D 53/22*(2006.01)i; *B01D 53/62*(2006.01)i; *B01D 53/74*(2006.01)i;
*B01D 53/78*(2006.01)i; *B01D 69/02*(2006.01)i
FI:    C01D7/07; B01D53/62; B01D53/78; B01D69/02; B01D53/74; B01D53/14 210; B01D53/22 ZAB

According to International Patent Classification (IPC) or to both national classification and IPC

**B.    FIELDS SEARCHED**

Minimum documentation searched (classification system followed by classification symbols)

C01D7/07; B01D53/14; B01D53/22; B01D53/62; B01D53/74; B01D53/78; B01D69/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-193911 A (SUMITOMO SEIKA CHEM CO LTD) 30 September 2013 (2013-09-30) paragraphs [0034]-[0036], fig. 1 | 1-4, 7, 14 |
| Y | | 5, 6, 8-10, 13 |
| A | | 11, 12 |
| X | JP 2021-536427 A (TATA CHEMICALS EUROPE LIMITED) 27 December 2021 (2021-12-27) claims, fig. 1 | 1-4, 7, 14 |
| Y | | 5, 6, 8-10, 13 |
| Y | WO 2022/030267 A1 (NITTO DENKO CORP) 10 February 2022 (2022-02-10) paragraphs [0101], [0150]-[0154] | 5, 6 |
| Y | JP 2012-206872 A (LION CORP) 25 October 2012 (2012-10-25) claim 1 | 8-10 |

☑ Further documents are listed in the continuation of Box C.     ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **15 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2023/007402** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2006-70005 A (KORI, Toshiya, KIMURA CHEM PLANTS CO LTD) 16 March 2006 (2006-03-16)<br>claim 4 | 13 |

**INTERNATIONAL SEARCH REPORT**
Information on patent family members

International application No.

**PCT/JP2023/007402**

| Patent document cited in search report | | | Publication date (day/month/year) | Patent family member(s) | | | Publication date (day/month/year) |
|---|---|---|---|---|---|---|---|
| JP | 2013-193911 | A | 30 September 2013 | (Family: none) | | | |
| JP | 2021-536427 | A | 27 December 2021 | US<br>claims, fig. 1<br>GB<br>WO | 2021/0253438<br>2576762<br>2020/044048 | A1<br>A<br>A1 | |
| WO | 2022/030267 | A1 | 10 February 2022 | (Family: none) | | | |
| JP | 2012-206872 | A | 25 October 2012 | (Family: none) | | | |
| JP | 2006-70005 | A | 16 March 2006 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005008478 A

**Non-patent literature cited in the description**

- **E. KAMIO et al.** *Adv.Mater*, 2017, vol. 29, 1704118